# EUROPEAN PATENT APPLICATION

(11) **EP 4 468 248 A1**
(43) Date of publication of application: **27.11.2024**
(21) Application number: 23175497.9
(22) Date of filing: 25.05.2023
(51) Int. Cl.: G06T 15/50

(54) **METHOD AND DEVICE SUITABLE FOR DETERMINING ILLUMINATION CONDITION OF A SCANNER APPARATUS**

(71) Applicant: Carl Zeiss Vision International GmbH, 73430 Aalen (DE)
(72) Inventor: NOELL, Tobias, 67657 Kaiserslautern (DE)
(74) Representative: Kraus & Lederer PartGmbB

(57) **Abstract**

A computer implemented method suitable for determining environment illumination of a scanner apparatus is provided, comprising: receiving at least one reference image of a reflective light probe placed in the scanner apparatus, and iteratively determining a light model of the environment illumination conditions by differential rendering based on the at least one reference image. The iteratively determining is performed at least with a first group of iterations and a second group of iterations after the first group, wherein an image resolution used in the differential rendering in the first group is lower than an image resolution used in the differential rendering in the second group.

## Description

The present application relates to methods and devices as well as computer programs and systems suitable for determining illumination conditions of a scanner apparatus.

For various virtual reality applications, real life objects need to be scanned to generate a model of the object. For example, for applications like virtual try-on or virtual determination of centration parameters, a representation of a spectacle frame in form of data on a computer is needed, for example as a 3D model of the spectacle frame or for example data allowing so called neural rendering. A 3D model of a spectacle frame may for example consist of vertices connected by lines and additional color data, transparency data or other properties like reflectivity. In neural rendering, based on images of the spectacle frame taken from different perspectives (i.e. from different directions), a neural network is trained, and using the trained neural network the spectacle frame may be rendered in an image on a computer screen also for different perspectives other than the perspectives where the images were captured.

Virtual try-on relates to applications where for example a customer can select spectacle frames online, without the need to go to a store where a plurality of different spectacle frames is physically present. The selected frames are then shown on a model of the customer's head to give a visual impression. Such a virtual try-on is for example described in WO2016/135078A1. Centration, where centration parameters for fitting spectacle glasses into a spectacle frame are determined, is for example described in WO2017/174525A1. While in some approaches described in this document centration is performed on a person using real spectacle frames, in other approaches described where a model of a spectacle frame is used.

In particular for applications like virtual try-on, the spectacle frame should appear, for example on a computer screen fitted to a head of the customer, as realistically as possible, such that the customer gets a correct visual impression how the spectacle frame looks on the customer. This relates to both to the form and to material properties of the spectacle frame. In this respect, a spectacle frame, as used herein, refers to an entity intended to accommodate spectacle glasses, and also includes so called rimless spectacle frames.

For all such applications, real spectacle frames of various types have to be captured, such that corresponding data may be provided which then can be used to generate spectacle frame models to render spectacle frames etc. For acquisition of data, various scanning setups such as light domes, which consist of a plurality of cameras and/or light sources are used. Such systems may have many cameras and many light sources for fast acquisition. Examples are the so called ESPER LightCage https:/www.esperhq.com/, or devices as described in Johannes Köhler et al "A full spherical device for simultaneous geometry and reflectance acquisition", 2013 IEEE workshop on applications of computer vision. A further approach is described in European patent application EP23166349.3. Similar approaches may be used for scanning objects other than spectacle frames.

For such scanning tasks or other tasks related to virtual reality the illumination conditions have to be determined. For example, when capturing images of objects like spectacle frames in a scanner apparatus, the appearance of the spectacle frame is determined by the way it reflects incidents light, and thus the appearance of the object is affected by incident light from the environment, for example illumination in the scanner apparatus. For example, reflectance properties of a surface like albedo color, roughness, or metal character depend on the environment. If they are estimated based on images captured, without knowledge of the environment illumination when the images are captured, there exists an ambiguity between the appearance and the illumination of the object. For example, an object with a highly reflective surface under a "smooth" illumination appears like a same object with a matte surface under a "sharp" illumination.

Another aspect is the so called augmented reality applications, where a virtual object is placed in a real environment. With unknown environment illumination, the virtual object would be shaded differently than the other objects in the scene and thus appear artificial. There are different ways of representing the environment illumination. Commonly, they are represented as incident light intensities for each direction from which the light may come in a 2D representation, for example as a spherical light probe image or in a latitude/longitude format or as a cube map. Such image based representation of the environment illumination has the benefit that it is a general way of modeling the illumination, allowing representation of arbitrarily illuminated scenes.

In practice, often a light probe in form of a highly reflective sphere, for example a mirror-polished steel ball, is used, that is positioned on a relevant position in the scene (for example at the position in a scanner where later an object to be scanned like a spectacle frame is placed) and an image of this light probe is taken with a telephoto lens (i.e. a lens with a high focal length) from a distance away such that an almost orthographic image is obtained. Due to the highly reflective surface of the light probe the incident illumination from the environment is reflected towards the camera and can thereby be measured in the image by the brightness and color of specific image points. Another approach is to position a camera in the center of the scene and take images into various angles which are then stitched together. While the first approach (light probe) has the benefit of requiring only a single image, the latter approach usually allows for a much higher resolution and yields for a more even sampling of the environment illumination.

Conventional approaches for acquiring the environment illumination are described in US6628298B1, Debevec, P. E. "Rendering synthetic objects into real scenes: Switching traditional and image-based graphics with global illumination and high dynamic range photography" see '89: Proceedings of the 25th annual conference on computer graphics and interactive techniques, or US10121451B2. Another approach is given by US11043025B2. These documents all use approaches as described above. An overview over various techniques for obtaining the environment illumination is found Kronander, J. et al, "Photorealistic rendering of mixed reality scenes", Computer Graphics Forum 2015.

Another approach for obtaining the environment illumination uses differential rendering. Differential rendering in general is described in Kato, H. et al, "Differentiable Rendering: A Survey, arXiv: 2006.12057 v2, 2020".

In differential rendering, generally a scene to be rendered is described by parameters. These parameters may include geometry, materials, scene lights and camera properties. Based on these parameters, the scene is rendered and compared to a reference, for example an image captured by a camera. Based on this comparison, an image base loss and gradients are obtained, which are used to optimize the parameters. This process is then repeated over several iterations. D. Azinovic et al: "Inverse Path Tracing for Joint Material and Lighting Estimation", arXiv: 1903.07145 , 2019 discloses an approach using differential rendering for measuring the environment illumination. This approach uses a fixed geometry for example of the light probe and yields an emission value for each surface point of a 3D scene.

Another approach using differential rendering for determining the environment illumination as explained in G. Nieto et al, "Robust Point Light Estimation Using Differentiable Rendering", arXiv: 1812.04857, 2018. Here, some geometry and material for a reflective surface is estimated based on an image using convolutional neural networks (CNNs), and based on this estimation and the image a differentiable renderer is used.

As explained above, the differential rendering is essentially an optimization process using gradients. For determining the environment illumination, it has turned out that in real situations this process does not always converge to the correct environment illumination, for example arriving at wrong minima which do not represent the environment illumination correctly. Therefore, starting from the above paper by Nieto et al, it is an object to provide improved techniques for obtaining an environment illumination for differential rendering, in particular for scanner applications.

A computer-implemented method suitable for determining illumination conditions of a scanner apparatus is provided, comprising:
receiving at least one image of a reflective light probe placed in the scanner apparatus, and
iteratively determining a light model of the environment illumination by differential rendering based on the at least one image. The method is characterized in that the iteratively determining is performed at least with a first group of iterations and a second group of iterations after the first group, wherein a resolution of the light model used in the differential rendering in the first group is lower than the resolution of the light model used in the differential rendering in the second group.

More than two groups of iterations may also be used, where the resolution of the light model increases from group to group.

By using such different resolutions of the light model, convergence may be improved, and a convergence to undesired local minima may be avoided.

Terms used above will be explained in the following:

A scanner apparatus relates to a device usable for scanning an object, for example spectacle frames, to generate a digital representation of the object, as explained in the introductory portion.

A light model refers to any representation of the environment illumination. Such light model may in particular comprise a 2D representation of the environment illumination, where pixels of the 2D representation represent the illumination from a certain direction. In other words, the light model is stored as a 2D image, e.g. a high dynamic range (HDR) image, and there is a mapping between the light ray directions and the pixel locations in the image, such that each pixel corresponds to the illumination by a light ray from a particular direction. Such 2D representations may for example be in a cube map format, a light probe format or a latitude longitude format. The resolution of the light model indicates the granularity with which different directions of light rays can be distinguished, e.g. the angular resolution of the directions. In case of a 2D image representation of the light model, a higher resolution therefore means a higher pixel resolution of the image representation (more different light rays), and a lower resolution means a lower pixel resolution of the image representation.

A group of iterations generally refers to one or more iterations. The differential rendering may be based on any conventional differential rendering technique, for example those described in the introductory portion. Essentially, in the iterative determining by differential rendering, for each iteration and for each image of the at least one image a rendered image based on the light model and its parameters is rendered, the rendered image is compared the respective image, which for easier distinction form the rendered image is also called reference image herein, and the parameters are then updated based on the comparing. An image corresponding to the light model refers to an image based on the light models and its parameters. While the resolution of the light model changes between the groups of iterations as explained above, the number of pixels of the image corresponding to the light model may always stay the same and may be the same as the resolution of the respective reference image.

For example, in some embodiments the light model resolution used in the first group of iterations may be half of or a quarter of the light model resolution used in the second group of iterations.

Then, comparing the rendered image with the respective reference image may in particular yield one or more loss functions, which are then used to update the parameters using backpropagation techniques.

The parameters of the light model are optimized through the iterations. Furthermore, for generating the rendered image, a view model parametrizing camera properties of one or more cameras used for capturing the one or more images and a light probe model characterizing the light probe may be used. Parameters of the view model and/or parameters of the light probe model may remain fixed or, as further explained below, may also be optimized.

In particular, the light model may be a parametric, differentiable model of the environment illumination. Ultimately, the parameters of this parametric light model need to be estimated, which light models with the estimated parameters then characterizes the environment illumination. In other words, with the method the parameters of this parametric light models are estimated and optimized through the iterative process above, by backpropagating gradients as explained further below. The model can be arbitrarily defined, i.e. as will be explained below different illumination environments may be modeled, and the was the parameters describing the illumination are stored may vary. In various embodiments preferably an image-based representation is used where the intensity values are stored in a 2D representation of a given resolution as mentioned above. In other words, the values of the pixels of this 2D representation (brightness, color) are the parameters of the light model in this case. This has the advantage that the use of cube maps or other representations is a conventional representation often used for the environment illumination and therefore can be easy used for further purposes, like a virtual try-on of spectacle frames.

In some embodiments, a distant illumination, i.e. an illumination which is distant enough such that parallax errors are negligible may be used, and the illumination intensity for each incident direction may be stored in a cube map or other 2D representation. In other embodiments, a spatially varying illumination may be defined by additionally geometrically modeling the structure of the scene (i.e. the scanner environment) like depth, parallax, etc. and sampling the 2D representation using 3D rays and not just directions. Hereby, the geometric model of the scene can range anywhere from a very simplistic one i.e. using a sphere of a particular radius and position, to a detailed 3D reconstruction of the geometry of the illumination. Therefore, the geometric model used for the illumination can range anywhere from a very simplistic one, for example using a sphere of a particular radius and position, to a detailed 3D reconstruction of the scene geometry. Examples for such models apart from those described herein are for example also disclosed in the above-cited references of Debevec et al. or Azinovic et al.

The view model parameters define the positions and projection properties for each camera view such that intrinsic or extrinsic parameters of the cameras and distortion coefficients. Such parameters may be derived at high precision by conventional camera calibration techniques, for example capturing predefined images and measuring the distortion, and the position of the cameras is fixed by geometry. Therefore, these parameters can be assumed to be constant and need not be optimized through the differential rendering. However, in case the parameters are unknown for some reason, they can be included in the optimization of the differential rendering.

Iteratively determining the light model by differential rendering may comprise concurrently determine a surface form of the reflective probe by the differential rendering. To this end, the above-mentioned parameters that are optimized may include parameters of the light probe model defining the surface form. In some embodiments, the light probe may have precise form which is known with high accuracy, and in this case no determination of parameters is necessary, and a fixed model may be used. However, such precise forms require a high manufacturing quality with low tolerances, which make such light probes comparatively expensive. With such embodiments where the parameters of a light probe model and hence the surface form of the light probe is determined in the course of the iterative determination, lower quality light probes which are cheaper may be used, which may include deviations from a nominal form. As such deviations are modeled in the process, they are taken into account.

For example, the light probe surface may be modeled using a mesh for example a triangular mesh, and a normal map. In this case, for example the normal directions may be parameters of the model. Another simple example of a model is a sphere, which is defined by radius and position of the origin as parameters. Other parametric, differentiable models may be used as well, and the parameters may be optimized using backpropagation. A differentiable model generally refers to a model where it is well defined how small changes in the parameters (e.g. vertex positions of the mesh, radius or position of the origin) affect the surface shape.

For example, with the above-explained parameters, the method may be performed as follows:
- For each camera position of a camera used for capturing images, synthetically an image of the light probe model illuminated by the light model for the respective view (camera) is modeled using a differentiable renderer. To generate the image, the intensity of each pixel "p" in the generated image that covers the light probe may be computed as follows:
   * Determine a corresponding 3D position "pos" on the surface of the light probe as defined by the light probe model
   * Determine the corresponding normal "norm" at the same point on the surface of the light probe
   * Determine a corresponding ray "view" directed from the position "pos" towards the camera position.
   * Determine the corresponding ray "reflection" of "view" reflected based on the normal "norm" using the law of reflection (incident angle=reflected angle)
   * Sampling the light model to determine the amount of illumination along the ray defined by "pos" as origin and "reflection" as direction and assigning it to pixel "p" of the image. Sampling here means that the intensity that the model assigns to this particular position "pos" and direction "reflection" is evaluated. For example in the distant light / spherical illumination model assumption mentioned above only the light direction is used, while the position is ignored, the direction is transformed to the correct pixel position in the 2D representation, e.g. cube map and the intensity stored in the cube map for this particular pixel is returned. For a detailed 3D reconstruction also mentioned above also the position is used.
- Define a fitting loss function in image space that is minimized when the generated images approach the provided images, which serve as a reference, which corresponds to the comparing step above. The fitting loss may be for example defined as the sum of mean square differences of the rendered image and the reference images, i.e. the received at least one image of the reflective light probe.
- Define a regularization loss function operating in parameter space, i.e. on the above defined parameter, to encourage a certain parameter configuration, for example smoothness. The regularization loss may encourage a smooth cube map and normal map by summing their main squared second derivatives, which minimizes the Laplacian.
- Evaluate an overall loss function as a linear combination of the fitting loss and the regularization loss, i.e. the overall loss is a sum of the fitting loss and the regularization loss, each weighted with a corresponding weighting parameter (which may be equal to 1). Partial derivatives of the overall loss with respect to the above-mentioned parameters may be calculated using back propagation, for example by applying the chain rule which is a formula that expresses the derivative of the composition of two differentiable functions. The parameters are then updated by shifting them a certain amount, for example a configurable amount, towards the negative gradient of the overall loss with respect to the respective parameter, which reduces the overall loss. This process is then repeated until convergence of the parameters or a predefined number of iterations.

In this process of repeating, the resolution of the light model is increased at least once (from the first group of iteration to the second group of iterations), and may be increased more than once. The initial values may be random values, some constant predefined values or based on prior information (for example an approximate known shape for the light probe, or an approximate illumination for the light model based on knowledge about the scanner apparatus, etc.).

The increasing resolution may also be performed for other parameters. For example, for the light probe model for the first group of iterations a lower resolution model of the surface of the light probe may be used, and the resolution may then be increased for the second group.

For example, when a scanner is used that has a spherical hull and the object to be scanned is positioned in the center of the sphere, the geometric scene structure may be modeled as a sphere defined by an unknown position and radius. The light intensity may be modeled over the surface of the sphere using a 2D cube map. The model can thus be evaluated for a given way by intersecting the sphere with that ray and returning the light intensity of the intersection point stored inside the cube map. The cube map may be initialized with random intensity values.

As a light probe model, in case the light probe consists of a reflective steel ball, which is not perfectly spherical and smooth, a coarse mesh approximation may be used as a model, together with a normal map. In the optimization, the mesh may be kept fixed, but the normal map values may be optimized to account for a priori unknown imperfection of the light probe surface and the finite resolution of the mesh. This normal map may be initialized with the interpolated vertex normals of the mesh.

The view model in this case may be modeled using standard extrinsic, intrinsic and distortion parameters derived from a calibration. The view model may be kept fixed for a known configuration. For example, if the scanner apparatus has three cameras, and the light probe is turned to eight different angles, 24 different views and therefore images may be used.

In a further embodiment, a method suitable for scanning an object, for example a spectacle frame, is provided, characterized by determining the illumination environment of scanner apparatus using any of the methods above, obtaining images of the object using the scanner apparatus, and determining material properties of the object based on the images of the object and the illumination conditions. The material properties may for example include reflection properties, as described e.g. in "The PBR Guide" by Wes McDermott, 2018, Allegorethmetic, The object may be a spectacle frame.

Corresponding computer programs, and devices are also provided, for example computer programs to perform the methods suitable for determining the environment illumination of a scanner apparatus described above, when executed on a computer or other processing device. The computer program may be provided on a non-transitory tangible storage medium (e.g. a CD or DVD), other storage medium (e.g. a volatile memory) or may be transmitted by a data carrier signal. A system including such a device programmed accordingly and a scanner apparatus may also be provided.

A data processing system comprising a processor and a storage medium coupled to the processor, wherein the processor is adapted to perform the steps of any of the methods described above or below, based on a computer program stored on the storage medium is also provided.

Embodiments will now be explained with reference to the attached drawings, wherein:
Fig. 1 is a schematic diagram of a system according to an embodiment,
Fig. 2 is a flowchart of a method according to an embodiment,
Fig. 3 is a schematic diagram of a scanner apparatus,
Fig. 4 is a schematic view of a light probe,
Figs. 5A-5C show example images,
Fig. 6 is a flowchart illustrating a method according to an embodiment,
Fig. 7 is a more detailed flowchart illustrating a method according to an embodiment,
Fig. 8 is a diagram illustrating generation of cube maps with increasing resolution,
Fig. 9A is an example rendered image,
Fig. 9B is an example cube map,
Fig. 10A is a comparative rendered image,
Fig. 10B is a comparative cube map and
Fig. 11 shows an example sequence of rendered images over a plurality of iterations.

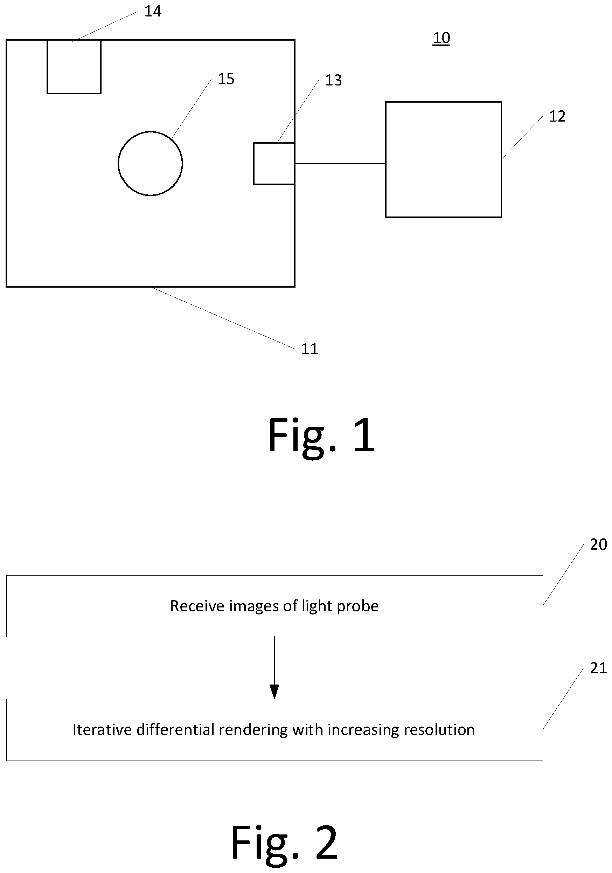

Fig. 1 is a schematic diagram of a system 10 according to an embodiment. System 10 comprises a scanner apparatus 11 and a processing device 12. Scanner apparatus 11 may for example include one or more light sources 14 for illumination, and one or more cameras 13 for capturing an object to be scanned.

For determining the environment illumination, a light probe 15, in the example of Fig. 1 a spherical light probe, having a reflective surface is placed in scanner apparatus 11. Light probe 15 is placed at the position where later an object to be scanned, for example a spectacle frame is placed. The one or more cameras 13 then capture images of the light probe and provide them to a computer device 12 as reference images. Based on the reference images, computer device 12 then determines a light model of the environment illumination, for example determines parameters of a parametric light model as explained above.

Fig. 2 is a flowchart illustrating a method according to an embodiment, which may be performed in computer device 12 of Fig. 1. Fig. 2 illustrates the method on a high level, possible detailed implantation details will be explained further below.

At step 20, the method comprises receiving one or more images of a light probe, for example of light probe 15 captured with cameras 13. At step 21, the method includes performing an iterative differential rendering process with increasing resolution as explained above to obtain a light model of the environment illumination.

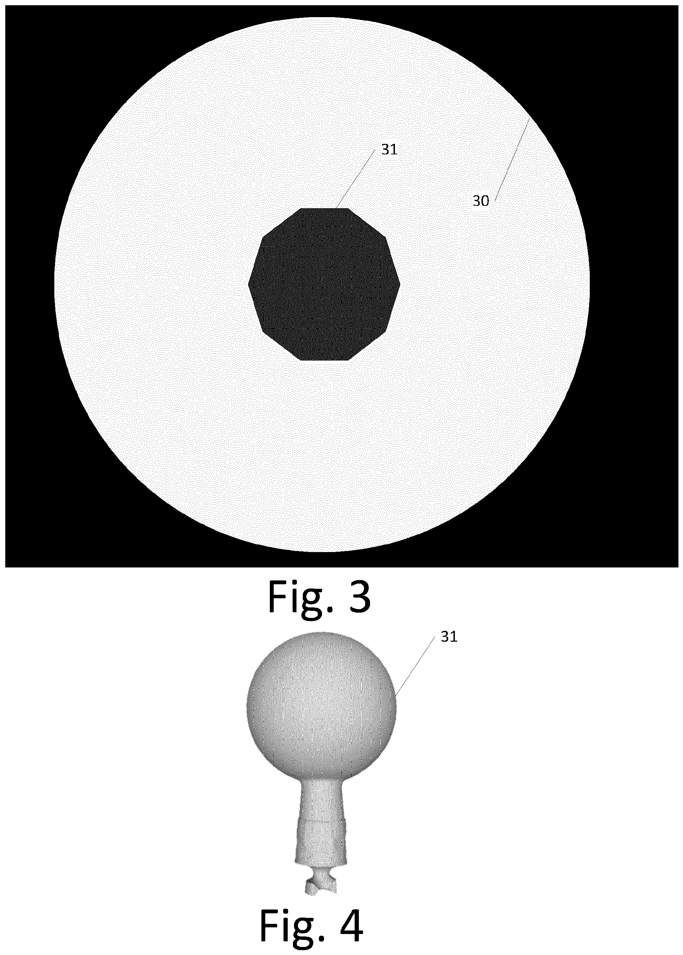

Fig. 3 illustrates a schematic view of a scanner apparatus having an essentially spherical hull 30, with a light probe 31 placed in the center of the spherical hull 30. In the spherical hull 30, opening for one or more cameras are provided and an illumination may be provided outside the spherical hull, which is transparent and may act as a diffusor for the illumination.

Fig. 4 is a schematic view of a spherical light probe 31 including a socket for placement. Spherical light probe 31 may have imperfections, i.e. deviations from a complete spherical shape, which may be accounted for in step 21 of Fig. 2 by also adapting a model of the light probe in the course of the iterative process, as explained above.

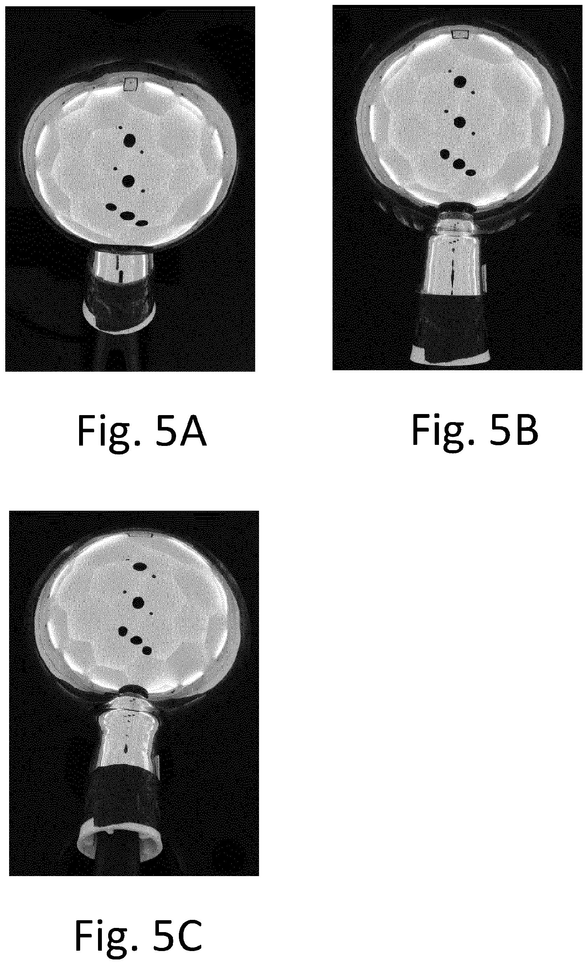

Figs. 5A-5C show example images taken of the spherical light probe 31 using cameras of the scanner apparatus from different perspectives. The black dots represent camera openings. These are examples for images provided to computer device 12 of Fig. 1 or images received at step 20 as a basis for the rendering process.

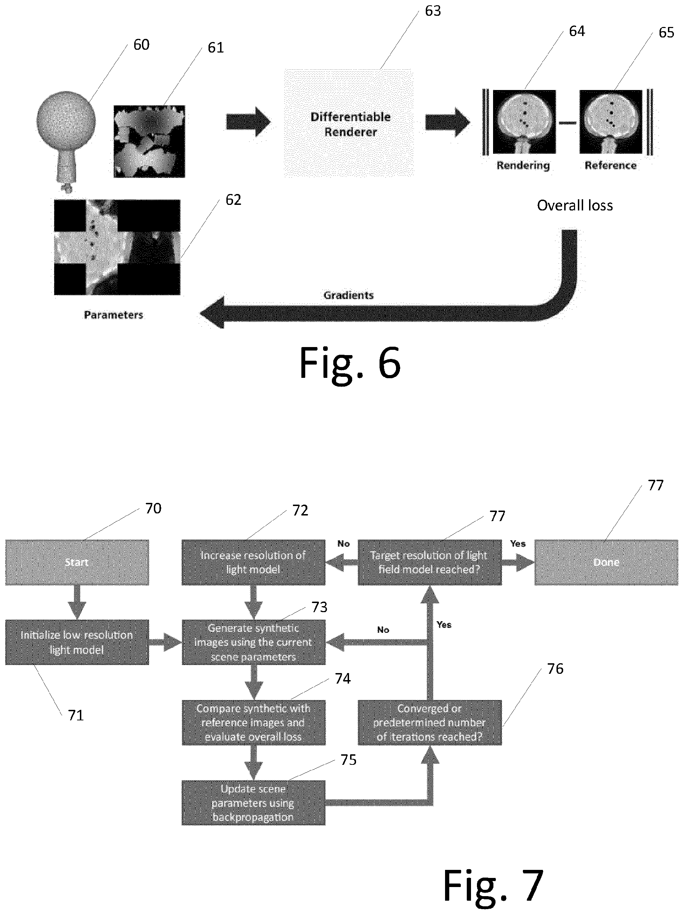

Fig. 6 is a diagram illustrating the differential rendering process at step 21 of Fig. 1.

A light probe model 60, for example in form of a mesh and a normal map as explained above, parameters 61 illustrating the camera, i.e. view parameters as discussed above, and a light model 62 in the form of a cube map, where pixels of the cube map represent the brightness of the illumination, are provided. The parameters may be initialized to random or predefined starting values, for example based on the knowledge of the general form of the light probe and arrangement of the camera, as explained above. A differential renderer 63 based on the parameters then generates a rendered image 64, which is compared to the actual captured image 65, which are used as reference images (for example the images of Figs 5A-5C). Based on the comparison, an overall loss is defined, for example an overall loss composed of a fitting loss and regularization loss as explained above. Based on the gradient of the loss depending on the parameters, the parameters are then updated, and the method is repeated.

Fig. 7 shows a more detailed diagram of a method according to an embodiment. The method starts at step 70. At step 71, a low resolution light model is initialized, i.e. certain start parameters are used, e.g. random pixel values for a 2D light model or predefined pixel values. At 73, images (corresponding to image 64 of Fig. 6) are rendered, and at step 74 these are compared to reference images (images of Fig. 5A-5C or image 65 of Fig. 6), and the loss functions explained above are evaluated. Based on the loss function, at 75 the parameters are updated using backpropagation.

At step 76 it is evaluated if a predetermined number of iterations has been reached or if the parameters have converged, for example that a change of the parameters in step 75 is below a predefined threshold. If this is not the case, step 73 to 75 are repeated for another iteration. If this is the case, at step 77 the method includes checking if a target resolution of the light model has been reached. If this not the case, at step 72 the resolution is increased, which corresponds to performing then a next group of iterations (73 to 76) with a higher resolution. If the target resolution is reached, the method ends at step 77.

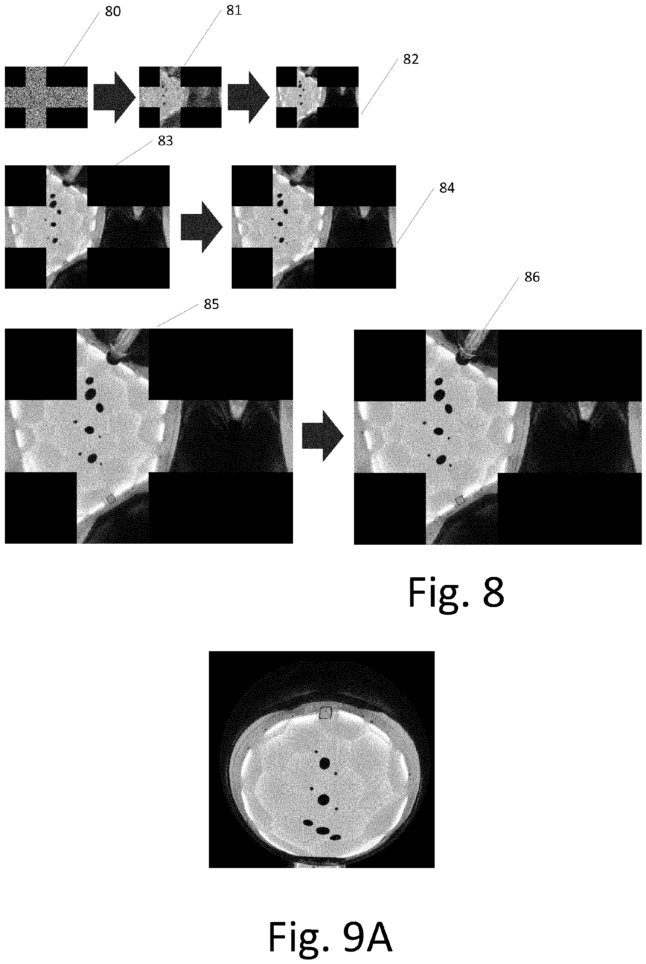

The increasing of the resolution is illustrated in Fig. 8. In Fig. 8, different resolutions for three groups of iterations are shown. At first, with a low resolution, the light model is improved from an essentially randomly initialized model 80 via some intermediate model 81 to a model 82 (all models represented as cube maps). With the model 82, in step 76 it is found that the model has converged, or a predetermined number of iterations is reached, but in step 77 it is found that the target resolution is not reached. Therefore, then the resolution is increased, where the parameters of model 82 are used as a starting point for a model 83 with increased resolution. For example, to increase the resolution, pixels of model 82 may be multiplied, such that as a starting point for example for a resolution 4x as high each pixel of model 82 is converted into 4 pixels (2 x 2) having the same value as the original pixel in model 83, additional pixels may be obtained by interpolation like bilinear interpolation. Essentially and conventional upscaling method may be used. With this model, then further iterations are performed until a model 84 is reached, at which the answer at step 76 is yes but the answer at step 77 of Fig. 7 is again no. Then, the resolution is increased again to arrive at a model 85, which is then optimized to arrive at an optimized model 86, at which then in this example both in step 76 and 77 the answer is yes, and the method is terminated. While three different resolutions are illustrated in Fig. 8, in other embodiments more different resolutions may be used, or only two different resolutions are used.

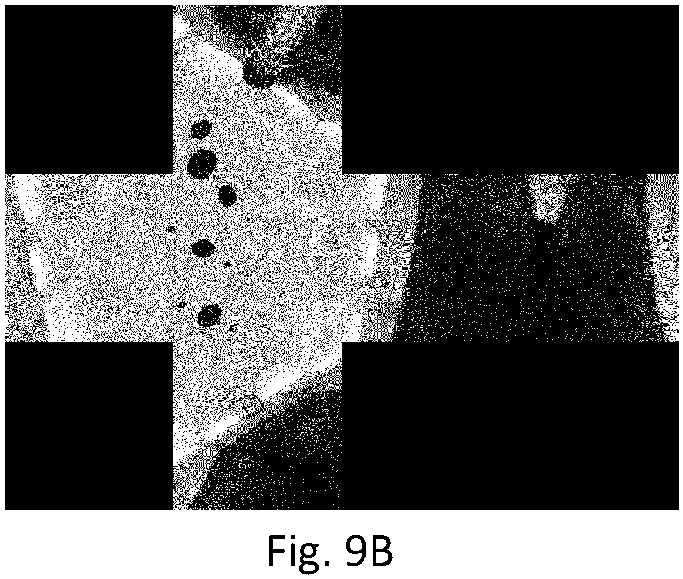

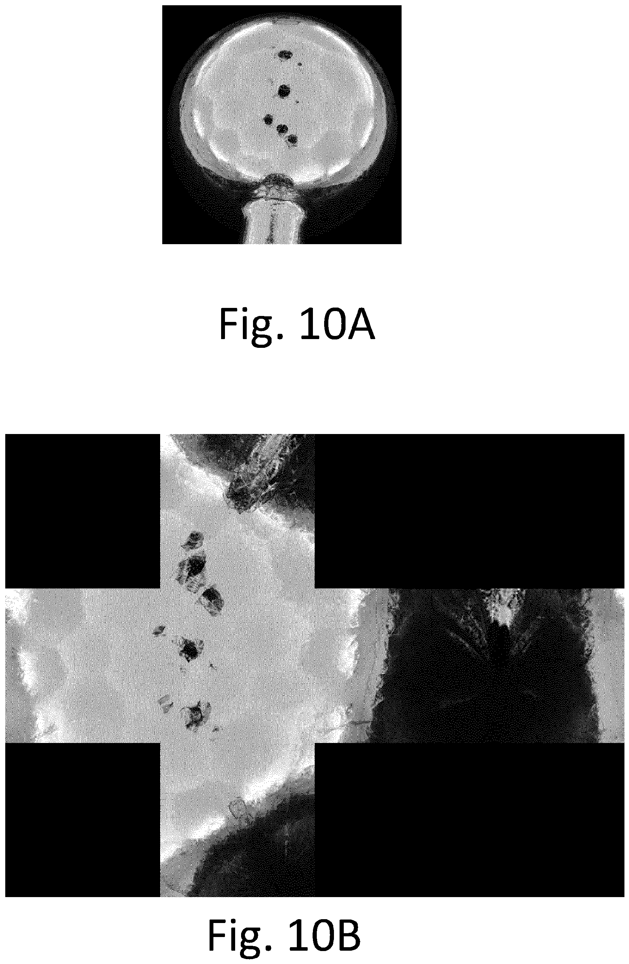

Fig. 9A illustrates an example for a rendered image using the techniques discussed herein, where the image of Fig. 9A is rendered in a perspective, i.e. viewing direction, corresponding to the image of Fig. 5A. The rendered image well coincides with the actual image. Fig. 9B shows a corresponding light model as a cube map (corresponding to light model 86). Fig. 10A shows a reference image with a conventional method, for example as described by Debevec et al. cited above where an ideal spherical light probe is assumed. and Fig. 10B shows a corresponding light model. As can be seen, both in the image of Fig. 10A and in the light model of Fig. 10B there are disturbances like distortions or jumps, which do not exist in the model of Fig. 9B.

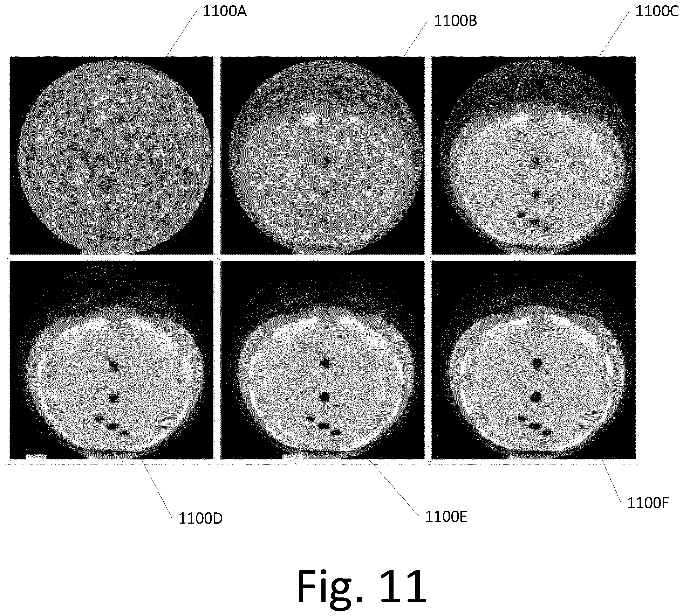

Fig. 11 shows images rendered over a plurality of iterations, from an essentially randomly initialized first image 1100A over intermediate images 1100B-1100E to a final image 1100F.

## Claims

1. A computer-implemented method suitable for determining an environment illumination of a scanner apparatus (11), comprising:
receiving at least one reference image (65) of a reflective light probe (15;31) placed in the scanner apparatus (11),
iteratively determining a light model (62; 80-86) of the environment illumination conditions by differential rendering based on the at least one reference image (65),
**characterized in that**
the iteratively determining is performed at least with a first group of iterations and a second group of iterations after the first group, wherein a resolution of the light model (62; 80-86) used in the differential rendering in the first group is lower than the resolution of the light model (62; 80-86) used in the differential rendering in the second group.

2. The method of claim 1, **characterized in that** the iteratively determining a light model (62; 80-86) by differential rendering, comprises, for each iteration and for each reference image (65) of the at least one reference image (65):
rendering an image (64; 1100A-1100F) corresponding to the light model (62; 80-86) based on parameters of the light model (62; 80-86),
comparing the rendered image (64; 1100A-1100F) with the respective reference image (65)
updating the parameters of the light model (62; 80-86) based on the comparing.

3. The method of claim 2, **characterized in that** the rendering of the image is further based on a light probe model (60) of the reflective light probe (15;31), wherein the iteratively determining further comprises updating parameters of the light probe model (60).

4. The method of claim 2 or 3, **characterized in that** the rendering of the image is further based on a view model parametrizing camera properties of one or more cameras (13) used for capturing the one or more images, wherein the iteratively determining further comprises updating parameters of the view model.

5. The method of any one of claims 1 to 4, **characterized in that** the iterative determining is performed with more than two groups of iterations, including the first and second group, wherein the resolution increases from group to group.

6. A method suitable for scanning an object, **characterized by**:
determining the environment illumination of a scanner apparatus (11) using the method of any one of claims 1 to 5,
obtaining images of the object using the scanner apparatus (11), and
determining material properties of the object based on the images of the object and the illumination conditions.

7. The method of claim 6, **characterized in that** the object is a spectacle frame.

8. A computer program comprising instructions which, when the program is executed by a computer, cause the computer to carry out the method of any one of claims 1 to 5.

9. A computer-readable storage medium having stored thereon the computer program of claim 8.

10. A device (14) suitable for determining an environment illumination of a scanner apparatus (11), comprising a processor configured to perform the following steps:
receiving at least one reference image (65) of a reflective light probe (15;31) placed in the scanner apparatus (11),
iteratively determining a light model (62; 80-86) of the environment illumination conditions by differential rendering based on the at least one reference image (65),
**characterized in that**
the iteratively determining is performed at least with a first group of iterations and a second group of iterations after the first group, wherein a resolution of the light model (62; 80-86) used in the differential rendering in the first group is lower than the resolution of the light model (62; 80-86) used in the differential rendering in the second group.

11. The device of claim 10, **characterized in that** the iteratively determining a light model (62; 80-86) by differential rendering, comprises, for each iteration and for each reference image (65) of the at least one reference image (65):
rendering an image (64; 1100A-1100F) corresponding to the light model (62; 80-86) based on parameters of the light model (62; 80-86),
comparing the rendered image (64; 1100A-1100F) with the respective reference image updating the parameters of the light model (62; 80-86) based on the comparing.

12. The device (14) of claim 11, **characterized in that** the rendering of the image is further based on a light probe model (60) of the reflective light probe (15;31), wherein the iteratively determining further comprises updating parameters of the light probe model (60).

13. The device (14) of claim 11 or 12, **characterized in that** the rendering of the image is further based on a view model parametrizing camera properties of one or more cameras used for capturing the one or more images, wherein the iteratively determining further comprises updating parameters of the view model.

14. The device (14) of any one of claims 10 to 13, **characterized in that** the iterative determining is performed with more than two groups of iterations, including the first and second group, wherein the resolution increases from group to group.

15. A system (10) suitable for scanning an object, **characterized by** comprising:
a scanner apparatus (11) comprising at least one camera configured to capture at least one image of the spectacle frame,
the device (14) of any one of claims 10 to 14 configured to determine the environment illumination of the scanner apparatus (11),
wherein the device (14) is further configured to determine material properties of the object based on the images of the object and the illumination conditions.
